# EUROPÄISCHE PATENTSCHRIFT

(11) **EP 4 015 202 B1**
(45) Veröffentlichungstag und Bekanntmachung des Hinweises auf die Patenterteilung: **20.08.2025**
(21) Anmeldenummer: 21212769.0
(22) Anmeldetag: 07.12.2021
(51) Int. Cl.: B29D 30/02, B29D 30/52

(54) **VERFAHREN ZUR HERSTELLUNG EINES VOLLREIFENS**
METHOD FOR PRODUCING A SOLID TYRE
PROCÉDÉ DE FABRICATION D'UN BANDAGE PLEIN

(30) Priorität: 15.12.2020 DE 102020215898
(43) Veröffentlichungstag der Anmeldung: 22.06.2022
(73) Patentinhaber: Continental Reifen Deutschland GmbH, 30175 Hannover (DE)
(72) Erfinder: Müller, Matthias-Stephan, 30165 Hannover (DE); Sauerwald, Hans-Jürgen, 30165 Hannover (DE)
(74) Vertreter: Continental Corporation

(56) Entgegenhaltungen:
- EP-A2- 0 787 604
- EP-A2- 0 881 060
- EP-A2- 1 213 383
- WO-A1-2018/001498
- DE-A1- 102016 212 509
- KR-B1- 100 644 261
- US-A1- 2015 101 737

## Beschreibung

Die Erfindung betrifft ein Verfahren zur Herstellung eines Vollreifens aufweisend einen elektrisch leitfähigen Pfad.

Flurförderfahrzeuge weisen, eingesetzt in sogenannten Non-Marking Anwendungen, in der Regel Vollreifen auf, die elektrisch nicht leitfähig sind. Dadurch kann es aufgrund von plötzlichen Spannungsentladungen zu einem zumindest temporären Ausfall der Fahrzeugelektronik kommen. Deshalb werden derartige Fahrzeuge aufwändig geerdet, um elektrostatische Aufladungen zu vermeiden. Dies erfolgt zum Beispiel in der Form von Erdungsketten, die unter dem Fahrzeug angebracht werden. Die Anforderung an eine ausreichende und permanente Erdung wird durch die zunehmende Digitalisierung der Fahrzeuge immer wichtiger.

Non-Marking Reifen sind dabei Reifen, deren Lauffläche ganz oder teilweise durch eine nichtkreidende Gummimischung gebildet ist.

Die EP 2036704 B1 offenbart ein Verfahren zur Herstellung eines Vollreifens aufweisend einen elektrisch leitfähigen Pfad. Der elektrisch leitfähige Pfad wird dabei durch Entfernen von Material des unvulkanisierten Reifens und Verfüllen des so geschaffenen Pfades mit elektrisch leitfähigem vulkanisierbarem Material geschaffen. Allerdings kann durch die anschließende formgebende Vulkanisation des Reifenrohlings und die damit einhergehenden Fließprozessen ein solcher elektrisch leitfähiger Pfad fehleranfällig sein.

Auch die EP 0787604 A2 sowie die EP 0881060 A2 offenbaren ein Verfahren zur Herstellung eines Vollreifens.

Der Erfindung liegt daher die Aufgabe zugrunde, ein Verfahren zur Herstellung eines Vollreifens, insbesondere eines Non-Marking Vollreifens, bereitzustellen, bei dem die elektrische Ableitfähigkeit des Reifens zum Fahrbahnuntergrund zuverlässiger sichergestellt ist.

Dies wird dadurch erreicht, dass das Verfahren zumindest die folgenden Schritte aufweist:
a) Bereitstellen eines vulkanisierten Fahrzeugreifens, wobei der Fahrzeugreifen ein Vollreifen ist, mit einem Laufstreifen aufweisend eine elektrisch nicht leitfähige Gummimischung, welche eine Lauffläche des Laufstreifens zumindest mitbildet, und mit einer als Kontaktfläche zu einer Felge vorgesehenen radial inneren Oberfläche,
b) Entfernen von einem Material des Vollreifens durch Einsatz eines Bohrmittels zur Schaffung einer länglichen Durchgangsverbindung von der Lauffläche bis zur radial inneren Oberfläche,
c) Aufspreizen der länglichen Durchgangsverbindung durch Einsatz eines Aufspreizmittels,
d) Einbringen von elektrisch leitfähigem Material in die aufgespreizte längliche Durchgangsverbindung von der Lauffläche bis zur radial inneren Oberfläche,
e) Entfernen des Aufspreizmittels, wodurch das elektrisch leitfähige Material einen die Lauffläche mit der radial inneren Oberfläche verbindenden elektrisch leitfähigen Pfad bildet.

Das Verfahren wird am bereits vulkanisierten Vollreifen durchgeführt. Fließprozesse im Zuge der Vulkanisation beeinflussen die Zuverlässigkeit des elektrisch leitfähigen Pfades somit nicht.

Die längliche Durchgangsverbindung verbindet die Lauffläche mit der als Kontaktfläche zu einer Felge vorgesehenen radial inneren Oberfläche des Reifens. Sie ist geeignet zur Aufnahme des elektrisch leitfähigen Materials zur Schaffung des die Lauffläche mit der radial inneren Oberfläche durchgehend verbindenden elektrisch leitfähigen Pfades. Durch das Aufspreizen der länglichen Durchgangsverbindung und das Einbringen des elektrisch leitfähigen Materials in die aufgespreizte längliche Durchgangsverbindung ist ein Verfahren zur Verfügung gestellt, durch das die Zuverlässigkeit des so geschaffenen elektrisch leitfähigen Pfades weiter verbessert ist. Nach Entfernen des Aufspreizmittels kann das elektrisch leitfähige Material zumindest durch Presspassung in der länglichen Durchgangsverbindung fixiert sein. Weiter ist durch das Aufspreizen der länglichen Durchgangsverbindung das elektrisch leitfähige Material ohne eine Reibung mit Wänden der länglichen Durchgangsverbindung in die längliche Durchgangsverbindung einbringbar. Eine durch eine solche Reibung verursachte Dehnung des elektrisch leitfähigen Materials in Richtung der länglichen Erstreckung der länglichen Durchgangsverbindung, welche im Betrieb des Reifens zu einer Verkürzung des elektrisch leitfähigen Pfades weg von der Lauffläche führen könnte, ist somit vermieden. Die Erfindung ermöglicht sogar den gegenteiligen Fall, nämlich dass die Presspassung das elektrisch leitfähige Material zu den Enden des elektrisch leitfähigen Pfades, insbesondere zur Lauffläche hin, drückt. Das elektrisch leitfähige Material kann dabei eine Erhebung in der Lauffläche des Reifens bilden. Somit ist es noch zuverlässiger ermöglicht, dass das elektrisch leitfähige Material die Lauffläche zumindest mitbildet und zumindest im Betrieb des Reifens mit der Fahrbahn in Kontakt kommt. Die elektrische Ableitfähigkeit des Reifens von der Lauffläche zur Fahrbahn hin, insbesondere im Betrieb des Reifens, ist somit noch besser gewährleistet.

Ein Vorteil der Erfindung ist somit darin zu sehen, dass mit dem neuartigen Herstellungsverfahren eine zuverlässigere elektrische Ableitfähigkeit des Vollreifens zum Fahrbahnuntergrund ermöglicht ist. Dadurch kommt es nicht mehr zu plötzlichen Spannungsentladungen, die zum Ausfall der Fahrzeugelektronik des Flurförderfahrzeuges führen können.

Gleichzeitig sind Vollreifen, insbesondere Non-Marking Vollreifen, durch das Verfahren einfach und kostengünstig mit dem elektrisch leitfähigen Pfad nachrüstbar. Die Nachrüstung kann flexibel auf die Anforderungen des speziellen nachzurüstenden Reifens angepasst sein. Eine Nachrüstung ist sowohl für Neureifen als auch für gebrauchte Reifen möglich.

Zweckmäßig ist es, wenn in Schritt b) das entfernte Material zumindest teilweise Material der elektrisch nicht leitfähigen Gummimischung, welche die Lauffläche des Laufstreifens zumindest mitbildet, ist.

Eine vorteilhafte Ausführungsform zeichnet sich dadurch aus, dass in Schritt b) das Bohrmittel ein Hohlbohrer ist.

Der Einsatz eines Hohlbohrers als Bohrmittel vermindert die Gefahr von Verletzungen einer Wandoberfläche der länglichen Durchgangsverbindung.

Eine weitere vorteilhafte Ausführungsform zeichnet sich dadurch aus, dass die elektrisch nicht leitfähige Gummimischung nichtkreidend ist.

Die Lauffläche ist somit außerhalb des elektrisch leitfähigen Pfades ganz oder teilweise aus der nichtkreidenden und elektrisch nicht leitfähigen Gummimischung gebildet. Somit ist auch für einen derartigen Reifen, insbesondere einen Non-Marking Reifen, eine zuverlässigere elektrische Ableitfähigkeit des Vollreifens zum Fahrbahnuntergrund ermöglicht.

Eine weitere vorteilhafte Ausführungsform zeichnet sich dadurch aus, dass in Schritt b) die längliche Durchgangsverbindung eine erste Querschnittsfläche aufweist, dass in Schritt c) die längliche Durchgangsverbindung durch das Aufspreizmittel auf eine zweite Querschnittsfläche aufgespreizt wird und dass in Schritt d) das eingebrachte elektrisch leitfähige Material eine dritte Querschnittsfläche aufweist und dass die dritte Querschnittsfläche kleiner als die zweite Querschnittsfläche und größer als die erste Querschnittsfläche ist.

Hierdurch ist ein besonders einfaches Einbringen des elektrisch leitfähigen Materials als auch eine einfache Fixierung des elektrisch leitfähigen Materials zumindest durch Presspassung durch die längliche Durchgangsverbindung ermöglicht.

Die Querschnittsflächen können jeweils gemessen sein senkrecht zu einer länglichen Erstreckung der länglichen Durchgangsverbindung. Die Querschnittsflächen können dabei gemessen sein bezüglich einer gleichen Schnittebene.

Für ein besonders einfaches Verfahren sind die Querschnittsflächen bevorzugt kreisförmig ausgebildet. Mit einem Bohrmittel ist eine kreisförmige erste Querschnittsfläche besonders einfach zu erzeugen. Zum Aufspreizen eignet sich besonders eine kreisförmige zweite Querschnittsfläche der aufgespreizten länglichen Durchgangsverbindung.

Eine weitere vorteilhafte Ausführungsform zeichnet sich dadurch aus, dass das Aufspreizmittel einen Aufnahmebereich zur Aufnahme des elektrisch leitfähigen Materials umfasst.

Der Aufnahmebereich stellt beispielsweise einen Innenraum des Aufspreizmittels dar, in den das elektrisch leitfähige Material inbesondere vor oder nach Schritt c) einbringbar ist.

Das elektrisch leitfähige Material kann in den Aufnahmebereich eingebracht werden und somit auch auf einfache Art und Weise in die vom Aufspreizmittel aufgespreizte Durchgangsverbindung eingebracht werden.

Der Aufnahmebereich kann dabei eine Durchgangsverbindung durch das Aufspreizmittel darstellen und offene Enden aufweisen. Das Aufspreizmittel kann beispielsweise ein rohrförmiger Körper, bevorzugt ein Hohlzylinder, sein, wobei das Innenvolumen den Aufnahmebereich des rohrförmigen Körpers darstellt.

Eine weitere vorteilhafte Ausführungsform zeichnet sich dadurch aus, dass der Aufnahmebereich in Schritt c) das elektrisch leitfähige Material für Schritt d) beinhaltet.

Schritt d) erfolgst somit ganz oder teilweise mit Schritt c). Hierdurch ist eine Einbringung des elektrisch leitfähigen Materials in die aufgespreizte längliche Durchgangsverbindung mit nur wenigen Prozessschritten ermöglicht. Das elektrisch leitfähige Material kann vor Schritt c) in den Aufnahmebereich des Aufspreizmittels eingebracht werden. Das elektrisch leitfähige Material wird dann zusammen mit dem Aufspreizmittel in die längliche Durchgangsöffnung eingebracht.

Eine weitere vorteilhafte Ausführungsform zeichnet sich dadurch aus, dass in Schritt d) das Einbringen des elektrisch leitfähigen Materials in die aufgespreizte Durchgangsverbindung ganz oder teilweise durch Einbringen des elektrisch leitfähigen Materials in den Aufnahmebereich des Aufspreizmittels erfolgt.

Schritt c) und Schritt d) erfolgen somit ganz oder teilweise zeitlich versetzt, wobei Schritt c) vor Schritt d) beginnt. Auch durch eine solche Ausführungsform kann eine einfache Einbringung des elektrisch leitfähigen Materials erfolgen. Beispielsweise kann in Schritt d) das elektrisch leitfähige Material, insbesondere ein Band aufweisend eine vulkanisierte elektrisch leitfähige Gummimischung, durch den Aufnahmebereich des Aufspreizmittels geführt werden.

Eine weitere vorteilhafte Ausführungsform zeichnet sich dadurch aus, dass das Aufspreizmittel umfassend den Aufnahmebereich ganz oder teilweise durch einen röhrchenförmigen Körper, insbesondere durch einen röhrchenförmigen Körper mit einer Querschnittsfläche des Aufnahmebereichs, die größer ist als die erste Querschnittsfläche und größer gleich der dritten Querschnittsfläche ist, gebildet ist.

Hierdurch ist ein besonders einfaches Aufspreizmittel ermöglicht. Das Aufspreizmittel kann durch den röhrchenförmigen Körper gebildet sein. Der röhrchenförmige Körper kann ein gerades und/oder flexibles Röhrchen sein. Der röhrchenförmige Körper kann auf beiden Enden des röhrchenförmigen Körpers offen ausgebildet sein. Das vom röhrchenförmigen Körper eingeschlossene Volumen kann der Aufnahmebereich sein.

Weist der Aufnahmebereich des röhrchenförmigen Körpers eine Querschnittsfläche auf, die größer ist als die erste Querschnittsfläche und größer gleich der dritten Querschnittsfläche ist, so kann das elektrisch leitfähige Material besonders einfach in den Aufnahmebereich eingeführt werden und das Aufspreizmittel kann besonders einfach, insbesondere mit wenig oder keiner Reibung zwischen Aufspreizmittel und elektrisch leitfähigem Material, entfernt werden.

Eine weitere vorteilhafte Ausführungsform zeichnet sich dadurch aus, dass der elektrisch leitfähige Pfad einen elektrischen Ableitwiderstand von maximal 1*10^10 Ohm (einmal zehn hoch zehn Ohm), insbesondere von maximal 1*10^8 Ohm, aufweist.

Hierdurch kann eine vorteilhafte elektrische Ableitfähigkeit des Reifens erreicht werden. Insbesondere kann der Reifen einen elektrischen Ableitwiderstand von maximal 1*10^10 Ohm, insbesondere von maximal 1*10^8 Ohm, aufweisen, gemessen am Neureifen gemäß wdk-Leitlinie 110.

Eine weitere vorteilhafte Ausführungsform zeichnet sich dadurch aus, dass das elektrisch leitfähige Material eine elektrisch leitfähige Gummimischung ist oder diese aufweist.

Gummimaterial eigent sich besonders gut für den Einsatz in technischen Gummiprodukten wie einem Vollreifen.

Im Sinne der Anmeldung kann ein Material ein elektrisch leitfähiges Material sein, wenn ein daraus gefertigtes Bauteil, insbesondere wenn der daraus gefertigte elektrisch leitfähige Pfad, einen elektrischen Ableitwiderstand von maximal 1*10^10 Ohm, bevorzugt von maximal 1*10^8 Ohm, aufweist.

Im Sinne der Anmeldung kann eine Gummimischung eine elektrisch leitfähige Gummimischung sein, wenn ein daraus gefertigtes Bauteil, insbesondere wenn der daraus gefertigte elektrisch leitfähige Pfad, einen elektrischen Ableitwiderstand von maximal 1*10^10 Ohm, bevorzugt von maximal 1*10^8 Ohm, aufweist. Die elektrisch leitfähige Gummimischung kann eine mit Rußmaterial gefüllte Mischung sein, mit der die elektrische Leitfähigkeit gewährleistet wird.

Im Sinne der Anmeldung kann eine Gummimischung eine elektrisch nicht leitfähige Gummimischung sein, wenn ein daraus gebildetes Bauteil, insbesondere ein daraus gebildeter Teil des Laufstreifens, einen elektrischen Ableitwiderstand von mindestens 1*10^11 Ohm auweist.

Eine weitere vorteilhafte Ausführungsform zeichnet sich dadurch aus, dass das elektrisch leitfähige Material in Form eines Bandes ausgeführt ist.

Ein derartig ausgebildetes elektrisch leitfähiges Material kann auf einfache Art und Weise in die aufgespreizte längliche Durchgangsverbindung eingebracht werden. Das derartig ausgebildete elektrisch leitfähige Material kann ebenso auf einfache Art und Weise in einen Aufnahmebereich des Aufspreizmittels eingebracht werden.

Ein Band ist dabei ein länglicher Körper, wobei jede Quererstreckung senkrecht zu einer Längserstreckungsrichtung des Bandes viel kleiner, insbesondere 10 mal kleiner, ist als eine Längserstreckung des Bandes. Ein Querschnitt des Bandes kann dabei kreisförmig oder rund oder eckig ausgebildet sein. Es handelt sich insbesondere um ein Band aufweisend oder bestehend aus einer elektrisch leitfähigen vulkanisierten Gummimischung.

Eine weitere vorteilhafte Ausführungsform zeichnet sich dadurch aus, dass sich die längliche Durchgangsverbindung geradlinig in radialer Richtung rR erstreckt.

Eine solche geradlinige längliche Durchgangsverbindung kann besonders einfach durch den Einsatz des Bohrmittels geschaffen werden.

Eine weitere vorteilhafte Ausführungsform zeichnet sich dadurch aus, dass in Schritt d) das elektrisch leitfähige Material so angebracht wird, dass es sich nach radial innen bis über die radial innere Oberfläche hinaus erstreckt.

Bei einer Montage des Reifens auf einer Felge wird über das über die radial innere Oberfläche hinaus erstreckte elektrisch leitfähige Material eine zuverlässige elektrische Ableitfähigkeit von der Felge über das elektrisch leitfähige Material bis zur Lauffläche ermöglicht.

Eine weitere vorteilhafte Ausführungsform zeichnet sich dadurch aus, dass die Schritte b) bis e) mehrmals ausgeführt werden, wobei jeweils die längliche Durchgangsverbindung und damit der geschaffene elektrisch leitfähige Pfad an der Lauffläche eine jeweils unterschiedliche Position in Umlaufrichtung U aufweist.

Durch mehrere elektrisch leitfähigen Pfade ist die elektrische Ableitfähigkeit des Reifens noch zuverlässiger sichergestellt. Weiter kann hierdurch der dritte Querschnitt jedes einzelnen der so geschaffenen elektrisch leitfähigen Pfade gering sein. Die elektrische Ableitfähigekeit zur Fahrbahn ist bei unterschiedlichen Reifenpositionen in Umfangsrichtung gewährleistet.

Weitere Merkmale, Vorteile und Einzelheiten des erfindungsgemäßen Verfahrens werden nun anhand der schematischen Zeichnungen, die Ausführungsbeispiele darstellen, näher erläutert. Dabei zeigt die
Fig. 1 einen Vollreifen nach Schritt a);
Fig. 2 einen Vollreifen nach Schritt b);
Fig. 3 einen Vollreifen nach Schritt c);
Fig. 4 einen Vollreifen nach Schritt d);
Fig. 5 einen Vollreifen nach Schritt e);
Fig. 6 einen Vollreifen nach Schritt e) montiert auf einer Felge.

Die Figuren zeigen den Reifen in unterschiedlichen Stadien des erfindungsgemäßen Verfahrens zur Herstellung des Fahrzeugreifens 1.

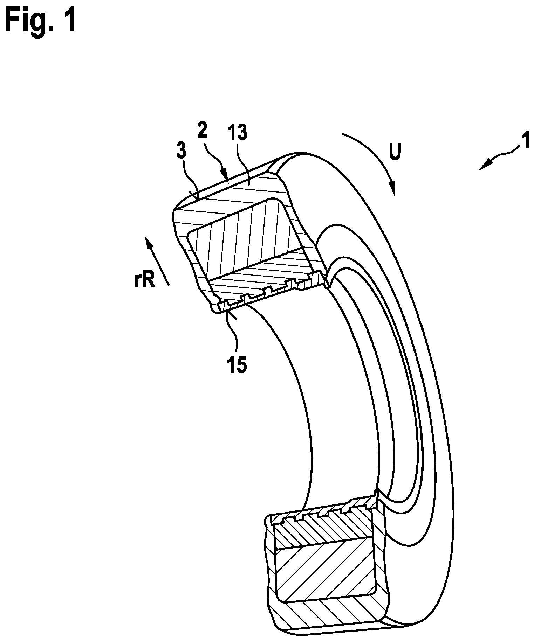

Die Fig. 1 zeigt einen vulkanisierten Fahrzeugreifen 1, wie er in Schritt a) des Verfahrens bereitgestellt wird. Der Fahrzeugreifen 1 ist ein Vollreifen mit einem Laufstreifen 2 aufweisend eine elektrisch nicht leitfähige Gummimischung 13, welche eine Lauffläche 3 des Laufstreifens zumindest mitbildet, und mit einer als Kontaktfläche zu einer Felge vorgesehenen radial inneren Oberfläche 15.

Die elektrisch nicht leitfähige Gummimischung 13 kann derart gestaltet sein, dass das daraus gebildete Bauteil einen elektrischen Ableitwiderstand von mindestens 1*10^11 Ohm aufweist. Die elektrisch nicht leitfähige Gummimischung 13 kann nichtkreidend sein. Der Vollreifen kann ein Non-Marking Reifen sein.

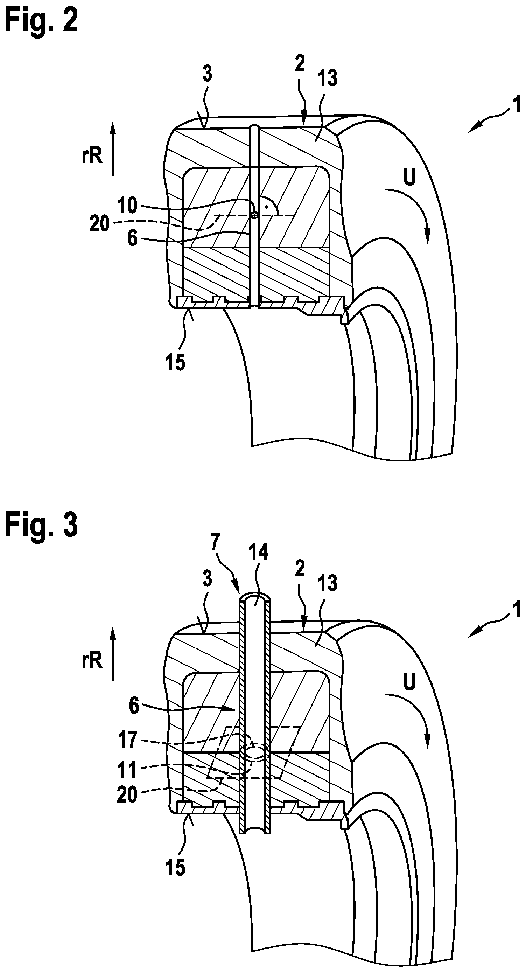

In einem folgenden Schritt b) wird Material des Vollreifens 1 durch Einsatz eines Bohrmittels zur Schaffung einer länglichen Durchgangsverbindung 6 von der Lauffläche 3 bis zur radial inneren Oberfläche 15 entfernt. Bevorzugt ist das Bohrmittel (nicht dargestellt) ein Hohlbohrer. Die Fig. 2 zeigt den Vollreifen 1 nach diesem Schritt. Deutlich ist die in Schritt b) geschaffene längliche Durchgangsverbindung 6 zu erkennen, welche sich von der Lauffläche 3 bis zur radial inneren Oberfläche 15 erstreckt.

Das in Schritt b) entfernte Material ist zumindest teilweise Material der elektrisch nicht leitfähigen Gummimischung 13, welche die Lauffläche 3 des Laufstreifens zumindest mitbildet.

Die längliche Durchgangsverbindung 6 erstreckt sich geradlinig in radialer Richtung rR.

**In** einem Schritt b) nachgelagerten Schritt c) erfolgt das Aufspreizen der länglichen Durchgangsverbindung 6 durch Einsatz eines Aufspreizmittels 7. Die Die Fig. 3 zeigt den Vollreifen 1 nach Schritt c). Deutlich ist das die längliche Durchgangsverbindung 6 aufspreizende Aufspreizmittels 7 erkennbar. Das Aufspreizmittel 7 umfasst wie dargestellt insbesondere einen Aufnahmebereich 14 zur Aufnahme des elektrisch leitfähigen Materials 8.

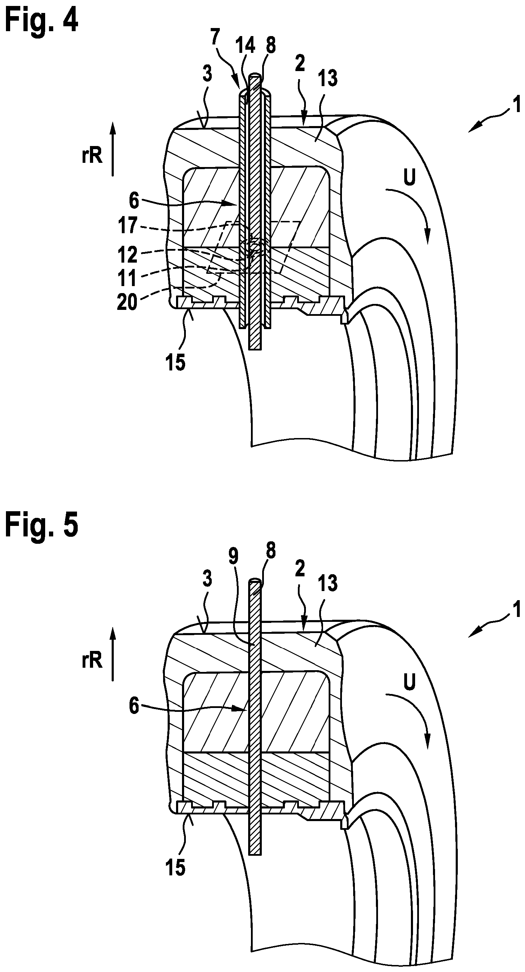

In Schritt d) erfolgt das Einbringen von elektrisch leitfähigem Material 8 in die aufgespreizte längliche Durchgangsverbindung 6 von der Lauffläche 3 bis zur radial inneren Oberfläche 15. Der Vollreifen 1 mit dem in Schritt d) in die aufgespreizte längliche Durchgangsverbindung 6 eingebrachte elektrisch leitfähige Material 8 ist in Fig. 4 dargestellt. Das elektrisch leitfähige Material 8 ist in Form eines Bandes ausgeführt. Es handelt sich insbesondere um ein Band aufweisend oder bestehend aus einer elektrisch leitfähigen vulkanisierten Gummimischung.

In Schritt d) wird das elektrisch leitfähige Material 8 so angebracht, dass es sich, wie in der Fig. 4 dargestellt, nach radial innen bis über die radial innere Oberfläche 15 hinaus erstreckt.

Die Figuren 3 und 4 stellen eine Abfolge dar, in der in Schritt d) das Einbringen des elektrisch leitfähigen Materials 8 in die aufgespreizte Durchgangsverbindung 6 ganz oder teilweise durch Einbringen des elektrisch leitfähigen Materials 8 in den Aufnahmebereich 14 des Aufspreizmittels 7 erfolgt. Schritt c) und Schritt d) erfolgen somit ganz oder teilweise zeitlich versetzt, wobei Schritt c) vor Schritt d) beginnt. Beispielsweise kann in Schritt d) das elektrisch leitfähige Material, insbesondere ein Band aufweisend eine vulkanisierte elektrisch leitfähige Gummimischung, durch den Aufnahmebereich des Aufspreizmittels geführt werden.

Alternativ ist es aber auch möglich, dass der Aufnahmebereich 14 in Schritt c) das elektrisch leitfähige Material 8 für Schritt d) beinhaltet. Schritt d) erfolgst somit ganz oder teilweise mit Schritt c). Das elektrisch leitfähige Material kann vor Schritt c) in den Aufnahmebereich des Aufspreizmittels eingebracht werden. Das elektrisch leitfähige Material wird dann zusammen mit dem Aufspreizmittel in die längliche Durchgangsöffnung eingebracht.

In Schritt e) erfolgt das Entfernen des Aufspreizmittels 7, wodurch das elektrisch leitfähige Material 8 einen die Lauffläche 3 mit der radial inneren Oberfläche 15 verbindenden elektrisch leitfähigen Pfad 9 bildet. Die Fig. 5 zeigt den Vollreifen 1 nach dem in Schritt e) erfolgten Entfernen des Aufspreizmittels 7. Der hierdurch durch das elektrisch leitfähige Material 8 gebildete elektrisch leitfähige Pfad 9, der die Lauffläche 3 mit der radial inneren Oberfläche 15 verbindet, ist deutlich zu erkennen.

Eine vorteilhafte elektrische Ableitfähigkeit des Reifens 1 ist ermöglicht, wenn der elektrisch leitfähige Pfad 9 einen elektrischen Ableitwiderstand von maximal 1*10^10 Ohm, insbesondere von maximal 1*10^8 Ohm, aufweist. Hierdurch kann der Reifen 1 einen elektrischen Ableitwiderstand von maximal 1*10^10 Ohm, insbesondere von maximal 1*10^8 Ohm, aufweisen. Besonders vorteilhaft ist es, wenn das elektrisch leitfähige Material 8 eine elektrisch leitfähige Gummimischung ist oder diese aufweist. Die elektrisch leitfähige Gummimischung kann eine mit Rußmaterial gefüllte Mischung sein, mit der die elektrische Leitfähigkeit gewährleistet wird.

In den Figuren ist gemäß einer Ausführungsform dargestellt, dass in Schritt b) die längliche Durchgangsverbindung 6 eine erste Querschnittsfläche 10 aufweist (Fig. 2), dass in Schritt c) die längliche Durchgangsverbindung 6 durch das Aufspreizmittel 7 auf eine zweite Querschnittsfläche 11 aufgespreizt wird (Fig. 3, Fig. 4) und dass in Schritt d) das eingebrachte elektrisch leitfähige Material 8 eine dritte Querschnittsfläche 12 aufweist (Fig. 4) und dass die dritte Querschnittsfläche 12 kleiner als die zweite Querschnittsfläche 11 und größer als die erste Querschnittsfläche 10 ist.

Die Querschnittsflächen 10, 11, 12, 17 können jeweils gemessen sein senkrecht zu einer länglichen Erstreckung der länglichen Durchgangsverbindung 6. Die Querschnittsflächen können dabei gemessen sein bezüglich der gleichen Schnittebene 20.

Die Querschnittsflächen 10, 11, 12, 17 können kreisförmig sein. Insbesondere kann die erste Querschnittsfläche kreisförmig ausgebildet sein.

Wie in der Fig. 4 dargestellt kamm das Aufspreizmittel 7 umfassend den Aufnahmebereich 14 ganz oder teilweise durch einen röhrchenförmigen Körper, insbesondere durch einen röhrchenförmigen Körper mit einer Querschnittsfläche 17 des Aufnahmebereichs, die größer ist als die erste Querschnittsfläche 10 und größer gleich der dritten Querschnittsfläche 12 ist, gebildet sein.

Die Schritte b) bis e) können mehrmals ausgeführt werden, wobei jeweils die längliche Durchgangsverbindung 6 und damit der geschaffene elektrisch leitfähige Pfad 9 an der Lauffläche 3 eine jeweils unterschiedliche Position in Umlaufrichtung U aufweist.

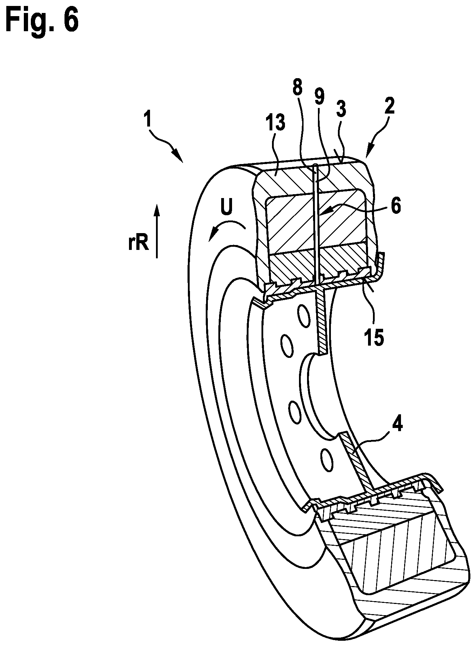

Die Fig. 6 zeigt einen erfindungsgemäß hergestellten Vollreifen 1, der auf einer Felge 4 montiert ist.

### Bezugszeichenliste

- 1: Fahrzeugreifen
- 2: Laufstreifen
- 3: Lauffläche
- 4: Felge
- 6: längliche Durchgangsverbindung
- 7: Aufspreizmittel
- 8: elektrisch leitfähiges Material
- 9: elektrisch leitfähiger Pfad
- 10: erste Querschnittsfläche der länglichen Durchgangsverbindung
- 11: zweite Querschnittsfläche des aufgespreizten länglichen Durchgangsverbindung
- 12: dritte Querschnittsfläche des elektrisch leitfähigen Materials
- 13: elektrisch nicht leitfähige Gummimischung
- 14: Aufnahmebereich des Aufspreizmittels
- 15: radial innere Oberfläche
- 17: Querschnittsfläche des Aufnahmebereichs
- 20: Schnittebene
- rR: radiale Richtung
- U: Umlaufrichtung

## Patentansprüche

1. Verfahren zur Herstellung eines Fahrzeugreifens (1), wobei das Verfahren zumindest die folgenden Schritte aufweist:
a) Bereitstellen eines vulkanisierten Fahrzeugreifens (1), wobei der Fahrzeugreifen ein Vollreifen ist, mit einem Laufstreifen (2) aufweisend eine elektrisch nicht leitfähige Gummimischung (13), welche eine Lauffläche (3) des Laufstreifens zumindest mitbildet, und mit einer als Kontaktfläche zu einer Felge vorgesehenen radial inneren Oberfläche (15),
b) Entfernen von einem Material des Vollreifens (1) durch Einsatz eines Bohrmittels zur Schaffung einer länglichen Durchgangsverbindung (6) von der Lauffläche (3) bis zur radial inneren Oberfläche (15),
c) Aufspreizen der länglichen Durchgangsverbindung (6) durch Einsatz eines Aufspreizmittels (7),
d) Einbringen von elektrisch leitfähigem Material (8) in die aufgespreizte längliche Durchgangsverbindung (6) von der Lauffläche (3) bis zur radial inneren Oberfläche (15),
e) Entfernen des Aufspreizmittels (7), wodurch das elektrisch leitfähige Material (8) einen die Lauffläche (3) mit der radial inneren Oberfläche (15) verbindenden elektrisch leitfähigen Pfad (9) bildet.

2. Verfahren nach Anspruch 1,
**dadurch gekennzeichnet, dass**
in Schritt b) das Bohrmittel ein Hohlbohrer ist.

3. Verfahren nach einem der vorhergehenden Ansprüche,
**dadurch gekennzeichnet, dass** die elektrisch nicht leitfähige Gummimischung (13) nichtkreidend ist.

4. Verfahren nach einem der vorhergehenden Ansprüche,
**dadurch gekennzeichnet, dass** in Schritt b) die längliche Durchgangsverbindung (6) eine erste Querschnittsfläche (10) aufweist, dass in Schritt c) die längliche Durchgangsverbindung (6) durch das Aufspreizmittel (7) auf eine zweite Querschnittsfläche (11) aufgespreizt wird und
dass in Schritt d) das eingebrachte elektrisch leitfähige Material (8) eine dritte Querschnittsfläche (12) aufweist
und dass die dritte Querschnittsfläche (12) kleiner als die zweite Querschnittsfläche (11) und größer als die erste Querschnittsfläche (10) ist.

5. Verfahren nach einem der vorhergehenden Ansprüche,
**dadurch gekennzeichnet, dass** das Aufspreizmittel (7) einen Aufnahmebereich (14) zur Aufnahme des elektrisch leitfähigen Materials (8) umfasst.

6. Verfahren nach Anspruch 5,
**dadurch gekennzeichnet, dass**
der Aufnahmebereich (14) in Schritt c) das elektrisch leitfähige Material (8) für Schritt d) beinhaltet.

7. Verfahren nach Anspruch 5,
**dadurch gekennzeichnet, dass**
in Schritt d) das Einbringen des elektrisch leitfähigen Materials (8) in die aufgespreizte Durchgangsverbindung (6) ganz oder teilweise durch Einbringen des elektrisch leitfähigen Materials (8) in den Aufnahmebereich (14) des Aufspreizmittels (7) erfolgt.

8. Verfahren nach zumindest Anspruch 5,
**dadurch gekennzeichnet, dass** das Aufspreizmittel (7) umfassend den Aufnahmebereich (14) ganz oder teilweise durch einen röhrchenförmigen Körper, insbesondere durch einen röhrchenförmigen Körper mit einer Querschnittsfläche (17) des Aufnahmebereichs, die größer ist als die erste Querschnittsfläche (10) und größer gleich der dritten Querschnittsfläche (12) ist, gebildet ist.

9. Verfahren nach einem der vorhergehenden Ansprüche,
**dadurch gekennzeichnet, dass**
der elektrisch leitfähige Pfad (9) einen elektrischen Ableitwiderstand von maximal 1*10^10 Ohm, bevorzugt von maximal 1*10^8 Ohm, aufweist.

10. Verfahren nach einem der vorhergehenden Ansprüche,
**dadurch gekennzeichnet, dass**
das elektrisch leitfähige Material (8) eine elektrisch leitfähige Gummimischung ist oder diese aufweist.

11. Verfahren nach einem der vorhergehenden Ansprüche,
**dadurch gekennzeichnet, dass**
das elektrisch leitfähige Material (8) in Form eines Bandes ausgeführt ist.

12. Verfahren nach einem der vorhergehenden Ansprüche,
**dadurch gekennzeichnet, dass**
sich die längliche Durchgangsverbindung (6) geradlinig in radialer Richtung rR erstreckt.

13. Verfahren nach einem der vorhergehenden Ansprüche,
**dadurch gekennzeichnet, dass** in Schritt d) das elektrisch leitfähige Material (8) so angebracht wird, dass es sich nach radial innen bis über die radial innere Oberfläche (15) hinaus erstreckt.

14. Verfahren nach einem der vorhergehenden Ansprüche,
**dadurch gekennzeichnet, dass**
die Schritte b) bis e) mehrmals ausgeführt werden, wobei jeweils die längliche Durchgangsverbindung (6) und damit der geschaffene elektrisch leitfähige Pfad (9) an der Lauffläche (3) eine jeweils unterschiedliche Position in Umlaufrichtung U aufweist.

## Claims

1. Method for producing a vehicle tyre (1), the method comprising at least the following steps:
a) providing a vulcanized vehicle tyre (1), the vehicle tyre being a solid tyre, with a tread (2) comprising an electrically non-conductive rubber compound (13), which is at least involved in forming a running surface (3) of the tread, and with a radially inner surface (15), which is provided as a contact surface with respect to a rim,
b) removing material from the solid tyre (1) by using a drilling means to create an elongated through-connection (6) from the running surface (3) to the radially inner surface (15),
c) spreading out the elongated through-connection (6) by using a spreading-out means (7),
d) introducing electrically conductive material (8) into the spread-out elongated through-connection (6) from the running surface (3) to the radially inner surface (15),
e) removing the spreading-out means (7), whereby the electrically conductive material (8) forms an electrically conductive path (9) connecting the running surface (3) to the radially inner surface (15).

2. Method according to Claim 1,
**characterized in that**
in step b) the drilling means is a hollow drill.

3. Method according to one of the preceding claims,
**characterized in that** the electrically non-conductive rubber compound (13) is non-marking.

4. Method according to one of the preceding claims,
**characterized in that** in step b) the elongated through-connection (6) has a first cross-sectional area (10), **in that** in step c) the elongated through-connection (6) is spread out by the spreading-out means (7) to a second cross-sectional area (11) and
**in that** in step d) the electrically conductive material (8) that is introduced has a third cross-sectional area (12)
and **in that** the third cross-sectional area (12) is less than the second cross-sectional area (11) and greater than the first cross-sectional area (10).

5. Method according to one of the preceding claims,
**characterized in that** the spreading-out means (7) comprises a receiving area (14) for receiving the electrically conductive material (8).

6. Method according to Claim 5,
**characterized in that**
the receiving area (14) in step c) contains the electrically conductive material (8) for step d).

7. Method according to Claim 5,
**characterized in that**
in step d) the introduction of the electrically conductive material (8) into the spread-out through-connection (6) takes place entirely or partly by introducing electrically conductive material (8) into the receiving area (14) of the spreading-out means (7).

8. Method according to at least Claim 5,
**characterized in that** the spreading-out means (7) comprising the receiving area (14) is entirely or partly formed by a tubular body, in particular by a tubular body with a cross-sectional area (17) of the receiving area which is greater than the first cross-sectional area (10) and greater than or equal to the third cross-sectional area (12).

9. Method according to one of the preceding claims,
**characterized in that**
the electrically conductive path (9) has an electrical discharge resistance of a maximum of 1*10^10 ohms, preferably a maximum of 1*10^8 ohms.

10. Method according to one of the preceding claims,
**characterized in that**
the electrically conductive material (8) is or comprises an electrically conductive rubber compound.

11. Method according to one of the preceding claims,
**characterized in that**
the electrically conductive material (8) takes the form of a strip.

12. Method according to one of the preceding claims,
**characterized in that**
the elongated through-connection (6) extends in a straight line in the radial direction rR.

13. Method according to one of the preceding claims,
**characterized in that** in step d) the electrically conductive material (8) is provided such that it extends radially inwards to beyond the radially inner surface (15).

14. Method according to one of the preceding claims,
**characterized in that**
steps b) to e) are performed a number of times, with in each case the elongated through-connection (6), and consequently the electrically conductive path (9) created, respectively having a different position in the direction of rotation U on the running surface (3).

## Revendications

1. Procédé de fabrication d'un pneu (1) de véhicule, le procédé présentant au moins les étapes suivantes :
a) la fourniture d'un pneu (1) de véhicule vulcanisé, le pneu de véhicule étant un bandage plein, avec une bande de roulement (2) comportant un mélange de caoutchouc (13) non conducteur électriquement, lequel forme conjointement au moins une surface de roulement (3) de la bande de roulement, et avec une surface (15) radialement intérieure prévue en tant que surface de contact avec une jante,
b) le retrait d'un matériau du bandage plein (1) en utilisant un moyen de perçage pour créer une liaison de transition (6) allongée de la surface de roulement (3) à la surface (15) radialement intérieure,
c) l'écartement de la liaison de transition (6) allongée en utilisant un moyen d'écartement (7),
d) l'introduction d'un matériau (8) électriquement conducteur dans la liaison de transition (6) allongée écartée de la surface de roulement (3) à la surface (15) radialement intérieure,
e) le retrait du moyen d'écartement (7), de sorte que le matériau (8) électriquement conducteur forme un trajet (9) électriquement conducteur reliant la surface de roulement (3) à la surface (15) radialement intérieure.

2. Procédé selon la revendication 1,
**caractérisé en ce que**
à l'étape b), le moyen de perçage est un foret creux.

3. Procédé selon l'une des revendications précédentes,
**caractérisé en ce que** le mélange de caoutchouc (13) électriquement non conducteur est sans farinage.

4. Procédé selon l'une des revendications précédentes,
**caractérisé en ce qu'**à l'étape b), la liaison de transition (6) allongée comporte une première surface de section transversale (10), qu'à l'étape c), la liaison de transition (6) allongée est écartée par le moyen d'écartement (7) sur une deuxième surface de section transversale (11), et
qu'à l'étape d), le matériau (8) électriquement conducteur comporte une troisième surface de section transversale (12),
et que la troisième surface de section transversale (12) est inférieure à la deuxième surface de section transversale (11) et est supérieure à la première surface de section transversale (10).

5. Procédé selon l'une des revendications précédentes,
**caractérisé en ce que** le moyen d'écartement (7) comprend une zone de réception (14) destinée à recevoir le matériau (8) électriquement non conducteur.

6. Procédé selon la revendication 5,
**caractérisé en ce que**
la zone de réception (14) renferme à l'étape c) le matériau (8) électriquement conducteur pour l'étape d).

7. Procédé selon la revendication 5,
**caractérisé en ce que**
à l'étape d), l'introduction du matériau (8) électriquement conducteur dans la liaison de transition (6) écartée est effectuée en totalité ou en partie par l'introduction du matériau (8) électriquement conducteur dans la zone de réception (14) du moyen d'écartement (7).

8. Procédé selon au moins la revendication 5,
**caractérisé en ce que** le moyen d'écartement (7) comprenant la zone de réception (14) est formé en totalité ou en partie par un corps tubulaire, en particulier par un corps tubulaire avec une surface de section transversale (17) de la zone de réception, qui est supérieure à la première surface de section transversale (10) et est supérieure ou égale à la troisième surface de section transversale (12).

9. Procédé selon l'une des revendications précédentes,
**caractérisé en ce que**
le trajet (9) électriquement conducteur présente une résistance de fuite électrique de 1*10^10 ohms au maximum, de manière préférée de 1*10^8 ohms au maximum.

10. Procédé selon l'une des revendications précédentes,
**caractérisé en ce que**
le matériau (8) électriquement conducteur est un mélange de caoutchouc électriquement conducteur ou comporte celui-ci.

11. Procédé selon l'une des revendications précédentes,
**caractérisé en ce que**
le matériau (8) électriquement conducteur est réalisé sous la forme d'une bande.

12. Procédé selon l'une des revendications précédentes,
**caractérisé en ce que**
la liaison de transition (6) allongée s'étend de manière rectiligne dans la direction radiale rR.

13. Procédé selon l'une des revendications précédentes,
**caractérisé en ce que** à l'étape d), le matériau (8) électriquement conducteur est placé de telle sorte qu'il s'étend vers l'intérieur radialement au-delà de la surface (15) radialement intérieure.

14. Procédé selon l'une des revendications précédentes,
**caractérisé en ce que**
les étapes b) à e) sont exécutées plusieurs fois, la liaison de transition (6) allongée et le trajet (9) électriquement conducteur ainsi créé présentant chacun sur la surface de roulement (3) une position respectivement différente dans la direction périphérique U.
